Europäisches Patentamt

European Patent Office

Office européen des brevets

(11) Publication number: **0 335 405**
**A2**

## EUROPEAN PATENT APPLICATION

(21) Application number: 89105667.3

(22) Date of filing: 30.03.89

(51) Int. Cl.⁴: **C04B 14/08**

(30) Priority: 31.03.88 IT 2004588

(43) Date of publication of application:
**04.10.89 Bulletin 89/40**

(84) Designated Contracting States:
**BE DE ES FR GB NL**

(71) Applicant: **TECNICHE INDUSTRIALI S.r.l.**
**84, Via Zorutti Campoformido**
**Udine(IT)**

(72) Inventor: **Contento, Maria Pia**
**Viale Venezia 506**
**I-33100 Udine(IT)**
Inventor: **Cioffi, Flavio**
**Viale Venezia 506**
**I-33100 Udine(IT)**

(74) Representative: **Barz, Peter, Dr. et al**
**Patentanwälte Dipl.-Ing. G. Dannenberg Dr.**
**P. Weinhold, Dr. D. Gudel Dipl.-Ing. S.**
**Schubert, Dr. P. Barz Siegfriedstrasse 8**
**D-8000 München 40(DE)**

(54) **Hardening compositions based on hydraulic binders.**

(57) Hardening compositions on the basis of hydraulic binders comprising:

    a) hydraulic binder;

    b) a granular fossil meal treated at a high temperature; and, optionally

    c) at least one emulsifier agent and/or at least one fluidifier agent.

EP 0 335 405 A2

## HARDENING COMPOSITIONS BASED ON HYDRAULIC BINDERS

The present invention relates to hardening compositions on the basis of hydraulic binders.

More particularly, the present invention relates to hardening compositions based on hydraulic binders, designed for use in the preparation of low-specific-gravity structural products.

Hardening compositions based on hydraulic binders containing a low-specific-gravity aggregate are already described in the relevant technical literature, such as, e.g., in BE-A-843 768; in DE-C-2 063 205; or in US-A-4 373 955; 4 097 422; 3 983 081 and 3 758 319.

According to what is disclosed in these patents, light concretes can be obtained by blending with the hydraulic bindes, generally a cement available from the market, such an aggregate as clay and/or foamed polystyrene, or low-density organic structural foams.

The so obtained compositions, after mixing with water and subsequent drying, make it possible low-specific-gravity concretes to be obtained, which unfortunately have rather poor mechanical properties, by far lower than as obtainable in case of classic concretes, which contain, as the aggregate, sands and gravels.

In U S - A - 4 624 711, a low-specific-gravity material is disclosed, which is based on a self-hardening, light ash, or "fly ash", obtained by burning sub-bituminous coal coming from Powder River Basin of Wyoming and Idaho States of the U.S.A..

This material is mixed with a surfactant and, optionally, an accelerator agent, in order to yield a hardening composition, which can be used as such, or as a partial substitute for cement in traditional concretes; in both cases, the end products obtained are endowed with substantially different characteristics: they either have a low specific gravity, but not high mechanical properties; or are endowed with structural features, but have a high specific gravity, owing to the presence of the aggregate traditionally used in concretes, such as sand or gravel.

The present Applicant has found now that the drawbacks affecting the prior art can be overcome by means of hardening compositions capable of yielding low-specific-gravity structural materials, in which an aggregate derived from the family of fossil meals is used.

Therefore, the object of the present invention are hardening compositions based on hydraulic binders, comprising:

a) a hydraulic binder;

b) a granular fossil meal treated at a high temperature; and, optionally

c) at least one emulsifier agent and/or at least one fluidifier agent.

Preferred compositions are those which comprise:

a) from 20 to 78% by weight of hydraulic binder;

b) from 20 to 78% by weight of a granular fossil meal treated at a high temperature;

c) from 0.01 to 1% by weight of an emulsifier agent; and

d) from 0.01 to 1% by weight of a fluidifier agent.

Still more preferred compositions are those which comprise:

a) from 30 to 58% by weight of hydraulic binder;

b) from 40 to 68% by weight of a granular fossil meal treated at a high temperature;

c) from 0.01 to 1% by weight of an emulsifier agent; and

d) from 0.01 to 1% by weight of a fluidifier agent.

The hydraulic binder used in the compositions according to the present invention can, e.g., be selected from cement, lime, gypsum, light ashes or fly ash as disclosed in U S - A - 4 624 711 and 4 210 457; and their mixtures; cement selected from Portland cement, pozzuolana cement, magnesium cement, aluminous cement, and so forth, as described in Kirk Othmer "Encyclopaedia of Chemical Technology", 2nd edition, vol. 4, page 684, is preferred.

Fossil meal is a material available from natural sources, in that is the product deriving from the decay of drifts of animal and/or vegetal origin.

In the manufacturing of the compositions according to the present invention, the use of fossil meals of animal origin, known as "diatomites" and described in Kirk Othmer "Encyclopaedia of Chemical Technology", 3rd edition, vol. 7, page 603, is preferred.

These fossil meals are baked at temperatures lower than 1 500°C, and preferably comprised within the range of from 800°C to 1 300°C, in preferably non-stationary furnaces, such as the revolving furnaces, or the rotary-drum furnaces, or the fluidized-bed furnaces, inside which the fossil meal is kept, during the baking step, under turbulent conditions by means of a rising stream of hot air.

The baking times depend on the end characteristics desired in the finished products; they are anyway comprised within the range of from 0.5 to 5 hours.

The fossil meals are used in the instant compositions, after baking, with variable granulometric characteristics, and generally with the average dimension (diameter) of their particles being comprised within the range of from 0.01 to 15 mm.

More particularly, the fossil meals having the following granulometric spectrum, are preferred:
- from 1 to 40%, preferably 1 to 20% by weight of granules with average dimensions comprised within the range of from 0.01 to 1 mm;
- from 20 to 60% by weight of granules with average dimensions comprised within the range of from 1 to 5 mm;
- from 20 to 60% by weight of granules with average dimensions comprised within the range of from 5 to 10 mm; and
- from 20 to 40% by weight of granules with average dimensions comprised within the range of from 10 to 15 mm,

The fossil meals can be fed to the baking furnaces already with the above mentioned granulometric distribution, or they can be fed to said furnaces with a very fine granulometry, e.g., with their granules having sizes lower than, or equal to, 0.01 mm, in that, during the baking, the agglomeration of said particles takes place, owing to the effect of heat, and leads to an end product endowed with suitable characteristics for the composition of the present invention.

The emulsifiers and fluidifiers are products known in the art, and already used in the preparation of concretes and mortars; the emulsifiers are generally constituted by vegetable and/or animal proteins, such as soy lecithin, and calcium caseinate; whilst the fluidifiers are generally constituted by calcium, sodium or ammonium sulphates or organic sulphonates, such as calcium dodecyl-benzene-sulphonate, mono-ethanol-amine lauryl-sulphate, ammonium lauryl-sukphate, ammonium dodecyl-benzene-sulphonate, and sodium naphthalene-sulphonate.

Preferred emulsifiers are soy lecithin, for example the product traded under the mark "CENTROPHASE® HR" by the company CENTRAL SOY of Fort Wayne (Indiana) in the U.S.A., whilst the preferred emulsifiers are constituted by a mixture of organic sulphonates manufactured by the present Applicant, and traded under the mark "TECNOSLUMP 21".

To the hardening compositions according to the present invention, further additives can be added, which are known in the art, and are commonly used in the preparation of concretes and mortars, such as the hardening accelerator agents, the thermosetting resins, such as the epoxy resins, the organic fibres, such as acrylonitrile fibres, or the inorganic fibres, such as asbestos fibres, or dyes.

The compositions according to the present invention can be kneaded with amounts of water comprised within the range of from 30 to 100% by weight relatively to the dry aggregate, and after drying, they yielded products having a specific gravity lower than 1 500 kg/m$^3$, generally comprised within the range of from 700 to 1 100 kg/m$^3$, and having a compression strength, as measured according to UNI 62132/72 standard, higher than 50 kg/cm$^2$ and generally comprised within the range of from 180 to 350 kg/cm$^2$.

In order to better understand the present invention, and to practice it, an illustrative, non-limitative example thereof is reported.

Example

One hundred kilograms of a fossil meal coming from Manville, U.S.A, and having the following granulometric spectrum:
- 10% by weight of granules having an average size comprised within the range of from 0.01 to 1 mm;
- 30% by weight of granules having an average size comprised within the range of from 1 to 5 mm;
- 30% by weight of granules having an average size comprised within the range of from 5 to 10 mm; and
- 30% by weight of granules having an average size comprised within the range of from 10 to 15 mm;

are treated inside a rotary-drum furnace at 1 200° C for 2 hours. With this material, the following hardening composition is prepared:
    a) 41.7 kg of cement of Portland 425 type;
    b) 56.7 kg of fossil meal;
    c) 46 g of an emulsifier of CENTROPHASE® HR type; and
    d) 405 g of a surfactant of TECNOSLUMP® 21 type.

This composition is intimately mixed in a concrete mixer, and to it 37 litres of water is simultaneously added.

From the end mix, 100 specimens were prepared, which consisted of cubes of 10 cm of side. Said specimens were cured for 28 days at 20° C and 90% relative humidity, and were then dried in a furnace at the temperature or 75° C for 8 hours.

The finished products had an average specific gravity of 1.05 kg/dm$^3$, a compression strength of 195 kg/cm$^2$, and contained a residual moisture of 6.6%.

## Claims

1. Hardening composition based on hydraulic binders, comprising:
   a) a hydraulic binder;
   b) a granular fossil meal treated at a high temperature; and, optionally
   c) at least one emulsifier agent and/or at least one fluidifier agent.

2. Compositions according to claim 1, comprising:
   a) from 20 to 78% by weight of hydraulic binder;
   b) from 20 to 78% by weight of a granular fossil meal treated at a high temperature;
   c) from 0.01 to 1% by weight of an emulsifier agent; and
   d) from 0.01 to 1% by weight of a fluidifier agent.

3. Compositions according to claim 1 or 2, comprising:
   a) from 30 to 58% by weight of hydraulic binder;
   b) from 40 to 68% by weight of a granular fossil meal treated at a high temperature;
   c) from 0.01 to 1% by weight of an emulsifier agent; and
   d) from 0.01 to 1% by weight of a fluidifier agent.

4. Compositions according to any of the preceding claims in which the hydraulic binder is selected from cement, lime, gypsum, light ashes or fly ash, or from their mixtures.

5. Compositions according to claim 4, in which the cement is selected from Portland cement, pozzuolana cement, magnesium cement or aluminous cement.

6. Compositions according to any of the preceding claims in which the fossil meal is a product deriving from the decay of drifts of animal and/or vegetal origin.

7. Compositions according to any of the preceding claims in which the fossil meal is baked at temperatures lower than 1 500°C, and preferably comprised within the range of from 800°C to 1 300°C, in preferably non-stationary furnaces, such as the revolving furnaces, or the rotary-drum furnaces, or the fluidized-bed furnaces inside which the fossil meal is kept, during the baking step, under turbulent conditions by means of the circulation of a rising stream of hot air.

8. Compositions according to claim 7, in which the baking times are comprised within the range of from 0.5 to 5 hours.

9. Compositions according to any of the preceding claims in which the fossil meals are used, after baking, with variable granulometric characteristics, and generally with their particles having an average dimension (diameter) comprised within the range of from 0.01 to 15 mm.

10. Compositions according to claim 9, in which the fossil meals have the following granulometric spectrum:
    - from 1 to 40%, by weight of granules with average dimensions comprised within the range of from 0.01 to 1 mm;
    - from 20 to 60% by weight of granules with average dimensions comprised within the range of from 1 to 5 mm;
    - from 20 to 60% by weight of granules with average dimensions comprised within the range of from 5 to 10 mm; and
    - from 20 to 40% by weight of granules with average dimensions comprised within the range of from 10 to 15 mm

11. Compositions according to any of the preceding claims in which the emulsifiers are generally constituted by vegetable and/or animal proteins, such as soy lecithin and calcium caseinate.

12. Compositions according to any of the preceding claims in which the fluidifiers are constituted by calcium, sodium or ammonium sulphates or organic sulphonates, such as calcium dodecyl-benzene-sulphonate, mono-ethanol-amine lauryl-sulphate, ammonium lauryl-sukphate, ammonium dodecyl-benzene-sulphonate, or sodium naphthalene-sulphonate.

13. Hardened compositions obtained by mixing and subsequently drying the hardening compositions according to claims from 1 to 12, with an amount of water comprised within the range of from 30 to 100% by weight relative to the dry aggregate, and having a specific gravity lower than 1 500 kg/m$^3$, generally comprised within the range of from 700 to 1 100 kg/m$^3$, and having a compression strength higher than 50 kg/cm$^2$ and generally comprised within the range of from 180 to 350 kg/cm$^2$.